# EUROPEAN PATENT APPLICATION

(11) **EP 3 610 970 A1**
(43) Date of publication of application: **19.02.2020**
(21) Application number: 18188779.5
(22) Date of filing: 13.08.2018
(51) Int. Cl.: B22F 3/105, B29C 64/135, B29C 64/153, B29C 64/393

(54) **METHOD FOR CALIBRATING AN APPARATUS FOR ADDITIVELY MANUFACTURING THREE-DIMENSIONAL OBJECTS**

(71) Applicant: Concept Laser GmbH, 96215 Lichtenfels (DE)
(72) Inventor: Petratschek, André, 96224 Burgkunstadt (DE); Hiemann, Denise, 96215 Lichtenfels (DE)
(74) Representative: Hafner & Kohl Patent- und Rechtsanwälte Partnerschaft mbB

(57) **Abstract**

Method for calibrating an apparatus (1) for additively manufacturing three-dimensional objects by means of successive layerwise selective irradiation and consolidation of layers of a build material which can be consolidated by means of an energy beam (2 - 5), which apparatus (1) comprises at least two irradiation units (7 - 10), each adapted to generate an energy beam (2 - 5), wherein each irradiation unit (7 - 10) is adapted to guide the corresponding energy beam (2 - 5) across an individual guiding region (21, 23, 25, 27) in a build plane (11), wherein at least two guiding regions (21, 23, 25, 27) overlap in at least one overlap region (29 - 33), comprising the steps:
- generating at least one calibration pattern (14 - 17) in the at least one overlap region (29 - 33) via each of the at least two energy beams (2 - 5), wherein the at least two calibration patterns (14 - 17) are generated in defined relative positions forming a superordinate pattern (18) in the at least one overlap region (29 - 33)
- determining a calibration status of the at least two irradiation units (7 - 10) based on a calibration information relating to the spatial arrangement of the at least two calibration patterns (14 - 17) in the superordinate pattern (18), in particular the relative position
- adjusting the at least one irradiation unit (7 - 10) dependent on the calibration status.

## Description

The invention relates to a method for calibrating an apparatus for additively manufacturing three-dimensional objects by means of successive layerwise selective irradiation and consolidation of layers of a build material which can be consolidated by means of an energy beam, which apparatus comprises at least two irradiation units, each adapted to generate an energy beam, wherein each irradiation unit is adapted to guide the corresponding energy beam across an individual guiding region in a build plane, wherein at least two guiding regions overlap in at least one overlap region.

Apparatuses for additively manufacturing three-dimensional objects and methods for calibrating the same are generally known from prior art. In particular, apparatuses are known that comprise irradiation devices that are adapted to generate at least two energy beams and guide the energy beams across the build plane to selectively irradiate and consolidate build material. Usually, the at least two energy beams can be guided in that an overlap region is generated in which the at least two guiding regions, i.e. regions in which each of the individual energy beams can be guided, overlap. For example, it is possible that an irradiation device is adapted to generate two energy beams, wherein each energy beam can be guided across the entire build plane, i.e. the plane in which build material is arranged to be irradiated in the additive manufacturing process. In this case, the overlap region extends over the entire build plane. It is also possible that the build plane is subdivided into guiding regions and that the overlap region only covers a minor part of the build plane.

Independent of how the build plane is subdivided into the guiding regions assigned to the individual energy beams, it has to be assured that the irradiation device is calibrated, as otherwise errors may occur in the irradiation process. For example, (stitching) errors may occur in regions in which a guiding region abuts another guiding region, as deviations in guiding and positioning the different energy beams on the build plane my cause the irradiation pattern to deviate from an intended irradiation pattern. Further, it is known from prior art that each energy beam can be calibrated, for example by irradiating lines into metal sheets, wherein it is possible to analyze the relative position of lines irradiated via two different beams in overlap regions, for instance.

However, such a calibration process is not suitable for irradiation devices adapted to generate multiple energy beams, e.g. four energy beams, as it is not possible to identify which line was irradiated via which energy beam. Additionally, if the arrangement of different irradiation units of the irradiation device is not simple, but the guiding regions assigned to the irradiation units are arranged complex on the build plane, the described calibration process cannot be used, as the irradiation patterns, in particular the lines irradiated via each of the energy beams cannot be distinguished. Hence, it is not possible to unmistakably assign an irradiation pattern to an energy beam that irradiated the irradiation pattern.

It is an object of the present invention to provide an improved method for calibrating an apparatus for additively manufacturing three-dimensional objects, in particular a method that is suitable for more than two energy beams and complex distributions of guiding regions.

The object is inventively achieved by a method according to claim 1. Advantageous embodiments of the invention are subject to the dependent claims.

The method described herein is a method for calibrating an apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electron beam. A respective apparatus can be an apparatus in which an application of build material and a consolidation of build material is performed separately, such as a selective laser sintering apparatus, a selective laser melting apparatus or a selective electron beam melting apparatus, for instance.

The apparatus may comprise a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

As described before, the invention relates to a method for calibrating additive manufacturing apparatuses. An additive manufacturing apparatus may comprise an irradiation device comprising at least two irradiation units each of which being adapted to generate an energy beam and guide the energy beam across the build plane. The inventive method for calibrating an additive manufacturing apparatus is based on the idea that at least one calibration pattern is generated in the at least one overlap region via each of the at least two energy beams, wherein the at least two calibration patterns are generated in defined relative positions forming a superordinate pattern in the at least one overlap region. Subsequently, the calibration status of the at least two irradiation units can be determined based on a calibration information relating to the spatial arrangement of the at least two calibration patterns in the superordinate pattern, in particular the relative position. Dependent on the calibration status that has been determined, the at least one irradiation unit is adjusted.

Hence, it is possible to generate at least one calibration pattern in the overlap region with the at least two energy beams. The calibration patterns are generated in that they are arranged in a defined spatial relation, e.g. each having a defined position and/or orientation, in the overlap region forming a superordinate pattern. The superordinate pattern therefore, comprises the at least two calibration patterns that are irradiated via the at least two energy beams. Based on the superordinate pattern the calibration status may be determined, for example generating calibration information relating to the spatial arrangement of the calibration patterns in the superordinate pattern, such as the relative position of the calibration patterns previously generated. For generating the calibration information, a distance between two distinctive points of the calibration patterns can be determined based on which a calibration status can be derived. It is possible to define a nominal relative position or a nominal distance between two distinctive points of the calibration patterns or defined orientations of the calibration patterns, wherein the calibration status may indicate that the at least two irradiation units are calibrated, if the determined relative position matches the nominal relative position or the determined orientation matches the defined orientation, repsectively. If a deviation from the nominal relative position / orientation is determined, the calibration status may indicate that at least one of the two irradiation units needs to be calibrated / adjusted.

Hence, it is possible to adjust the at least one irradiation unit dependent on the calibration status. If for one of the irradiation units the calibration status indicates that an adjustment is necessary, the corresponding irradiation unit can be adjusted in that the superordinate pattern is irradiated properly.

Advantageously, the inventive method allows for calibrating an additively manufacturing apparatuses comprising two irradiation units or more irradiation units, respectively, independent of the arrangement of the irradiation units. It is only necessary that the at least two irradiation units comprise guiding regions that overlap in at least one overlap region in which both irradiation units can generate corresponding calibration patterns to form the superordinate pattern.

According to a preferred embodiment of the inventive method, each calibration pattern may comprise at least one defined reference marker, in particular a reference point and/or a reference line, wherein the calibration information is determined based on the relative position of at least two reference markers of two different calibration patterns in the same superordinate pattern. In other words, the superordinate pattern comprises at least two different calibration patterns irradiated via different irradiation units or different energy beams generated via different irradiation units, respectively. Each of the calibration patterns comprises one or more defined reference markers, such as reference points or reference lines or any other arbitrary structure that can be used as reference marker.

Subsequently, the relative position of the at least two calibration patterns in the superordinate pattern can be determined based on the position, in particular the relative position, of the at least two reference markers. Hence, the superordinate pattern can be analyzed with respect to the relative position of the calibration patterns comprised in the superordinate pattern. In particular, it is possible to determine the distance between two reference markers, for example two lines of the calibration patterns and thereby determine whether the individual calibration patterns are generated in the right position or with the right distance to the other calibration pattern, respectively.

It is possible to determine a defined gap generated between each two corresponding reference markers defining the relative position of two calibration patterns in the superordinate pattern. Hence, it is possible to generate the calibration patterns, wherein each calibration pattern comprises a reference marker, for example a distinctive line in the calibration pattern. The calibration patterns are generated in that, if both irradiation units are properly calibrated, a gap is generated between two corresponding reference markers of two adjacent calibration patterns in the superordinate pattern. Hence, it is possible to determine the size of the gap to decide whether the irradiation units are calibrated or need to be adjusted. Thus, it is possible to generate the calibration information, in particular the calibration status, based on the determination of the gap. In the scope of this application, the term "abut" is also used for two adjacent calibration patterns enclosing a gap.

Preferably, the reference marker may be a contour or an edge of the calibration pattern, wherein two adjacent calibration patterns comprise two, in particular parallel, contours or edges (or parts thereof) enclosing the defined gap. According to this embodiment, each of the calibration patterns comprises an edge or a contour that is, for example, arranged in parallel to the contour or edge of an adjacent calibration pattern in the superordinate pattern. The two reference markers may be spaced a defined distance away from each other, namely the defined gap can be generated between the two reference markers. In other words, it is possible to have the superordinate pattern comprise at least two calibration patterns that are irradiated via the at least two irradiation units, wherein a gap between two distinctive reference markers, in particular contours or edges of two abutting calibration patterns can be determined to decide whether the irradiation units are properly calibrated.

The inventive method may further be improved in that each irradiation unit generates (is adapted to generate) an individual calibration pattern with a corresponding energy beam, in particular different in size and/or shape and/or orientation from at least one other calibration pattern generated via another irradiation unit. In other words, the generated calibration patterns are distinctive for each irradiation unit. For example, the different irradiation patterns generated via different irradiation units may differ in size and/or shape and/or orientation. Thus, it is possible to directly identify the irradiation unit that generated the calibration pattern by the size and/or the shape and/or the orientation of the individual calibration pattern, as it differs from calibration patterns generated via the at least one other irradiation unit. Hence, if one of the calibration patterns of a superordinate pattern is not positioned correctly it can be identified which irradiation unit has to be adjusted to calibrate the apparatus. Thus, if a plurality of irradiation units is used to irradiate structures in a common overlap region, for example four irradiation units generating energy beams that can be guided in a common overlap region, it is advantageously possible to directly identify which calibration pattern of the superordinate pattern, for example comprising four calibration patterns, was generated via which energy beam or via which irradiation unit, respectively.

Further, it is possible that at least two irradiation units generate (are adapted to generate) calibration patterns that are equal in shape and different in size and/or orientation. Hence, it is possible to have multiple irradiation units, for example four irradiation units, generate calibration patterns that are equal in shape, for example squares, rectangles, circles or rhombi, wherein the individual calibration patterns generated via the different irradiation units can differ in size and/or orientation. For example, one irradiation unit may generate a rectangle that surrounds the other calibration patterns, wherein edges of the calibration patterns may be arranged in parallel and may be used as reference marker. It is also possible to have the irradiation units generate triangles with different orientation in the superordinate pattern, for example three irradiation units generating three different triangles with different orientation, e.g. rotated via 120°.

According to another embodiment of the inventive method, calibration patterns may be generated in at least two defined positions, in particular equally distributed, across the guiding regions with each irradiation unit, wherein in each overlap region in which at least two guiding regions overlap, the calibration patterns generated via the at least two irradiation units abut each other enclosing the defined gap. Hence, it is possible to generate arbitrary calibration patterns via the at least two irradiation units in at least two different defined positions. Hence, each irradiation unit may generate more than one (identical) calibration pattern in at least two different positions, wherein it is particularly preferred that each calibration pattern may be generated equally distributed across the guiding region of each irradiation unit. Hence, in the overlap regions in which at least two guiding regions overlap, the calibration patterns abut each other, preferably enclosing the defined gap. Thus, it is possible to generate the superordinate patterns in the overlap region, wherein dependent on the overlap region, in particular dependent on which guiding regions overlap in the individual overlap region, the superordinate pattern is generated differently, i.e. comprises different calibration patterns.

The superordinate pattern may be understood as defined target geometry comprising at least two different calibration patterns that abut each other in the corresponding overlap region. For example, four irradiation units may be provided that generate four different calibration patterns. In a first overlap region in which all guiding regions of the energy beams generated via the four different irradiation units overlap, the superordinate pattern comprises the four different calibration patterns. In another overlap region, in which only two guiding regions overlap, the corresponding superordinate pattern only comprises the two corresponding calibration patterns generated via the two energy beams.

It is particularly preferred that each guiding region is equally filled with the corresponding calibration pattern via the corresponding irradiation unit. For example, a predefined distribution of the calibration patterns over the guiding region may be provided, e.g. grid-like, wherein the corresponding calibration patterns may be, e.g. equidistantly, generated throughout the guiding region. Hence, each irradiation unit may generate calibration patterns equally distributed over the corresponding guiding region. Thus, dependent on where guiding regions overlap to form overlap regions, the corresponding calibration patterns in those guiding regions will form superordinate patterns by which the calibration information can be generated, as described before. Therefore, it is possible to identify which guiding regions of which irradiation units overlap in a specific overlap region, as the superordinate pattern comprises the calibration patterns distinctive for the individual irradiation units.

For example, as described before, it is also possible that at least two overlap regions comprise a different number of overlapping guiding regions. For instance, a first overlapping region may comprise four overlapping guiding regions, whereas a second overlap region comprises only two or three overlapping guiding regions. Of course, the number of overlapping guiding regions depends on the arrangement of the irradiation units in the additive manufacturing apparatus and how the energy beams are controlled, in particular guided, across the build plane. Hence, dependent on how the energy beams are guided and how the guiding regions are set, overlap regions are formed comprising different numbers of overlapping guiding regions and therefore, comprising different superordinate patterns comprising different numbers and/or types of calibration patterns, e.g. different types are generated by different irradiation units, as described before.

According to another embodiment of the inventive method, the guiding regions assigned to the individual irradiation units may be distributed over the build plane according to a defined distribution, wherein the superordinate patterns formed by the calibration patterns differ in at least two overlap regions. As described before, dependent on the arrangement and, for example, the irradiation strategy, the guiding regions that are assigned to the individual irradiation units or the guiding regions in which the individual irradiation units guide the generated energy beams, can be distributed according to a defined distribution.

For example, it is possible that in a first overlap region formed by overlapping a first and a second guiding region the calibration patterns generated via a first and a second irradiation unit form a first superordinate pattern. In a second overlap region formed by overlapping a third and a fourth guiding region, the calibration patterns generated via a third and a fourth irradiation unit form a second superordinate pattern. Of course, an arbitrary distribution and arrangement of the irradiation units is feasible, wherein the calibration patterns that are generated in the overlapping guiding regions forming the overlap region define which superordinate pattern is generated in the overlap region.

The calibration status may further be determined for at least two superordinate patterns in two different positions, in particular for all superordinate patterns. Hence, it is possible to not only determine the calibration status for one single superordinate pattern, but it is also possible to determine the calibration status of the at least two irradiation units for multiple positions in the build plane. For example, at least two superordinate patterns or multiple superordinate patterns, may be analyzed, for example generating the calibration information based on the gap between the at least two calibration patterns comprised in the superordinate pattern. Thus, it is possible to determine whether the irradiation unit or the irradiation units are properly calibrated over the entire build plane or over the entire overlap region(s), respectively.

It is also possible that by performing the inventive method at least one superordinate pattern may be generated in which every calibration pattern abuts every other calibration pattern with at least one reference marker or an indirect relation is established between at least two calibration patterns abutting an intermediate calibration pattern. In other words, it is possible that the superordinate pattern is formed by calibration patterns that directly abut each other, wherein each calibration pattern abuts every other calibration pattern forming the superordinate pattern.

It is also possible that the superordinate pattern comprises calibration patterns that are not directly abutting each other via the reference marker, but an indirect relation can be established via at least one calibration pattern being arranged between the two other calibration patterns. For example, if the superordinate pattern is formed via three calibration patterns, wherein a first calibration pattern abuts the second calibration pattern, which abuts a third calibration pattern, but the first calibration pattern does not directly abut the third calibration pattern, a relation between the first and the third calibration pattern can be established via the second calibration pattern being arranged intermediate between the first and the third calibration pattern. Of course, any other arbitrary arrangement or number of calibration patterns can form a superordinate pattern, wherein a relation can be established between an arbitrary number of directly or indirectly adjacent calibration patterns.

According to another embodiment of the inventive method, four irradiation units may be used to generate four calibration patterns, wherein three calibration patterns are generated as rhombi with different orientations, in particular differing by 120°, and one calibration pattern is generated as a hexagon, wherein in an overlap region in which all for guiding regions overlap, each calibration pattern abuts the three other calibration patterns with a corresponding reference marker, in particular with a parallel edge. For example, it is possible that the three calibration patterns that are generated as rhombi directly abut each other with an edge of the rhombus, wherein the hexagon is generated around (surrounding) the three other calibration patterns. Hence, the hexagon directly abuts each of the rhombi, wherein each rhombi abuts the two other rhombi and the hexagon. Therefore, a direct relation between all calibration patterns and therefore, between the irradiation units in the overlap region is established.

Besides, the invention relates to a control unit for calibrating an apparatus for additively manufacturing three-dimensional objects by means of successive layerwise selective irradiation and consolidation of layers of a build material which can be consolidated by means of an energy beam, which apparatus comprises at least two irradiation units, each adapted to generate an energy beam, wherein each irradiation unit is adapted to guide the corresponding energy beam in an individual guiding region across the build plane, wherein at least two guiding regions overlap in at least one overlap region, wherein the control unit is adapted to generate at least one calibration pattern in the at least one overlap region via each of the irradiation units being adapted to generate the at least two energy beams, wherein the control unit is adapted to generate the at least two calibration patterns in defined relative positions forming a superordinate pattern in the at least one overlap region, wherein the control unit is adapted to determine a calibration status of the at least two irradiation units based on a calibration information relating to the spatial arrangement of the at least two calibration patterns in the superordinate pattern, in particular the relative position, wherein the control unit is adapted to adjust the at least one irradiation unit dependent on the calibration status.

Further, the invention relates to an apparatus for additively manufacturing three-dimensional objects by means of successive layerwise selective irradiation and consolidation of layers of a build material which can be consolidated by means of an energy beam, comprising at least two irradiation units, each adapted to generate an energy beam, wherein each irradiation unit is adapted to guide the corresponding energy beam in an individual guiding region across the build plane, wherein at least two guiding regions overlap in at least one overlap region, wherein a control unit is provided, in particular an inventive control unit, as described before, that is adapted to generate at least one calibration pattern in the at least one overlap region via each of the irradiation units being adapted to generate the at least two energy beams, wherein the control unit is adapted to generate the at least two calibration patterns in defined relative positions forming a superordinate pattern in the at least one overlap region, wherein the control unit is adapted to determine a calibration status of the at least two irradiation units based on a calibration information relating to the spatial arrangement of the at least two calibration patterns in the superordinate pattern, in particular the relative position, wherein the control unit is adapted to adjust the at least one irradiation unit dependent on the calibration status.

Self-evidently, all features, details and advantages described with respect to the inventive method are fully transferable to the inventive control unit and the inventive apparatus. In particular, the inventive method may be performed on the inventive apparatus, preferably using an inventive control unit.

Exemplary embodiments of the invention are described with reference to the Fig. The Fig. are schematic diagrams, wherein
- Fig. 1: shows an inventive apparatus;
- Fig. 2: shows a superordinate pattern generated via an irradiation device of the apparatus from Fig.; and
- Fig. 3: shows a top view of a build plane of the apparatus from Fig. 1.

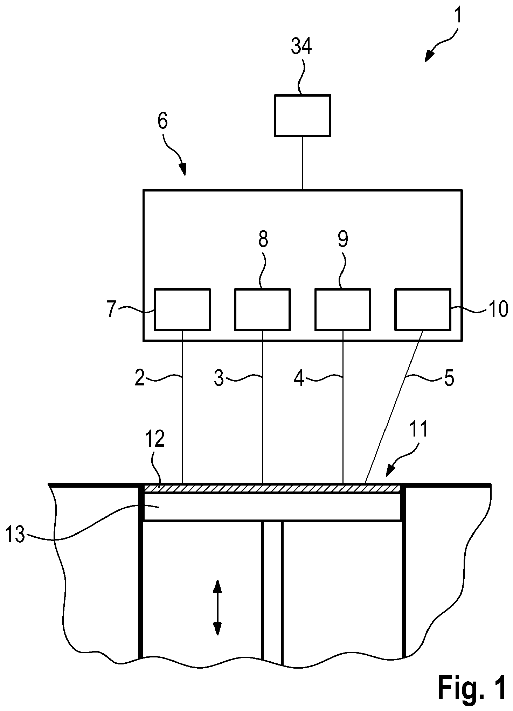

Fig. 1 shows an apparatus 1 for additively manufacturing three-dimensional objects (not shown) by means of successive layerwise selective irradiation and consolidation of layers of a build material (not shown) which can be consolidated by means of an energy beam 2 - 5. The apparatus 1 is not depicted in a regular mode of operation, but in a calibration process. The apparatus 1 comprises an irradiation device 6 with four irradiation units 7 - 10. As can be derived from Fig. 1, each of the irradiation units 7 - 10 of the irradiation device 6 is adapted to generate one of the energy beams 2 - 5 and guide the respective energy beam 2 - 5 across a build plane 11. In particular, each irradiation unit 7 - 10 has a distinctive part of the build plane 11 assigned thereto, which is defined as "guiding region" in which the respective irradiation unit 7 - 10 is adapted to guide the energy beam 2 - 5.

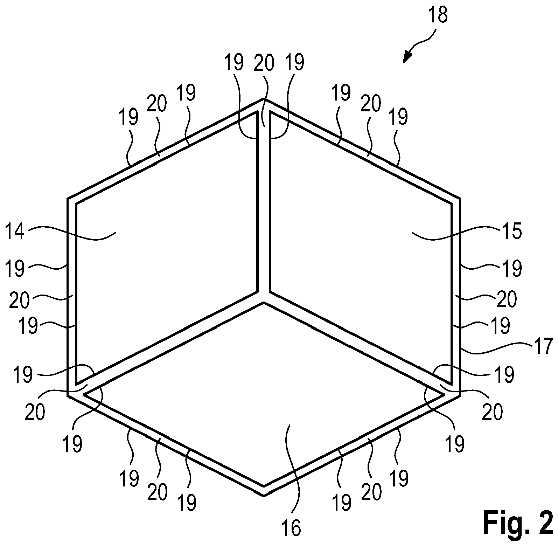

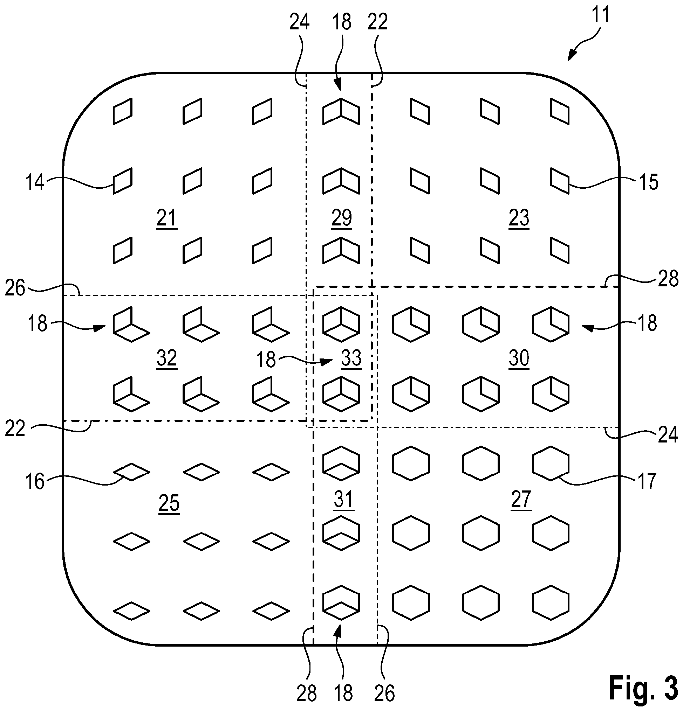

The division of the build plane 11 into guiding regions depends on various factors, such as the arrangement of the irradiation units 7 - 10. In particular, the build plane 11 in this exemplary embodiment is divided into four guiding regions in that the guiding regions of the irradiation unit 7 - 10 overlap in different overlap regions, as will be described with respect to Fig. 3 below. In this exemplary embodiment, a calibration substrate 12 is arranged on a build plate 13, wherein calibration patterns 14 - 17 (fig. 2) can be irradiated into the calibration substrate 12. Of course, it is also possible to arrange a layer of build material as calibration substrate 12 to be irradiated via the energy beams 2 - 5. It is also possible to use any other arbitrary test specimen, such as a sheet of metal or the like. Of course, it is not necessary to arrange the calibration substrate 12 on a build plate 13 which is height-adjustable, as any other arbitrary arrangement of the calibration substrate 12 is also feasible.

As described before, each irradiation unit 7 - 10 is adapted to generate a calibration pattern 14 - 17 in the build plane 11, in particular on the calibration substrate 12. According to this exemplary embodiment, the irradiation device 6 is adapted to generate a distinctive calibration pattern 14 - 17 via each of the irradiation units 7 - 10 using the corresponding energy beam 2 - 5. As can be derived from Fig. 2, each calibration pattern 14 - 17 has a distinctive shape and/or orientation allowing for a direct identification of the irradiation unit 7 - 10 that is used to irradiate the specific calibration pattern 14 - 17.

For example, the calibration patterns 14 - 16 comprise rhombus shape, wherein the different calibration patterns 14 - 16 differ in orientation, in particular they are rotated about +/-120°. Hence, it is possible to identify that, for example, the calibration pattern 14 is generated via the irradiation unit 7 using the energy beam 2, whereas the calibration pattern 15 is generated via the irradiation unit 8 using the energy beam 3 and the calibration pattern 16 is generated using the irradiation unit 9 with the energy beam 4. The calibration pattern 17 is generated via the irradiation unit 10 using the energy beam 5, wherein the calibration pattern 17 comprises hexagon shape and surrounds the three other calibration patterns 15 - 16.

Together the calibration patterns 14 - 17 form a superordinate pattern 18. As can further be derived from Fig. 2, each of the calibration patterns 14 - 17 directly abuts the other calibration patterns 14 - 17. For example, each calibration pattern 14 - 17 comprises reference markers 19, e.g. the edges of the shape of the calibration patterns 14 - 17. The reference markers 19 of each two abutting calibration patterns 14 - 17 are arranged in parallel and spaced by a gap 20. It is possible to determine the size of the gap 20 between two calibration patterns 14 - 17, wherein the determined size of the gap 20 can be compared with a nominal size. If a difference occurs between the determined size of the gap 20 and the nominal size an adjustment to the corresponding irradiation unit(s) 7 - 10 can be deemed necessary. It is also possible to derive whether each calibration pattern 14 - 17 is generated with the right orientation and in the right position and with the right size, for instance.

The generation of the calibration patterns 14 - 17 and the division of the build plane 11 into different guiding regions will be described with respect to Fig. 3 that shows a top view on the build plane 11, as indicated in Fig. 1. As described before, the apparatus 1 comprises an irradiation device 6 with four irradiation units 7 - 10, wherein a specific part of the build plane 11 is assigned to each irradiation unit 7 - 10. For example, the irradiation unit 7 is assigned a guiding region 21, as indicated via a border 22, the irradiation unit 8 is assigned a guiding region 23, as indicated via a border 24, the irradiation unit 9 is assigned a guiding region 25, as indicated via 26 and the irradiation unit 10 is assigned a guiding region 27, as indicated via border 28. In other words, the build plane 11 is subdivided into the guiding regions 21, 23, 25 and 27, wherein the guiding regions 21, 23, 25 and 27 overlap in different overlap regions, as will be described below.

In this exemplary embodiment, the guiding regions 21 and 23 overlap in an overlap region 29, the guiding regions 23 and 27 overlap in an overlapping region 30, the guiding regions 25 and 27 overlap in an overlapping region 31 and the guiding regions 25 and 21 overlap in an overlapping region 32. As can further be derived from Fig. 3, each irradiation unit 4 - 10 generates the distinctive calibration pattern 14 - 17 in the corresponding guiding region 21, 23, 25 and 27. Additionally, an overlap region 33 is formed in which all for guiding regions 21, 23, 25 and 27 overlap.

In other words, the irradiation unit 7 generates the calibration pattern 14 equally distributed throughout the guiding region 21, the irradiation unit 8 generates the calibration pattern 15 throughout the guiding region 23, the irradiation unit 9 generates the calibration pattern 16 in the guiding region 25 and the irradiation unit 10 generates the calibration pattern 17 in the guiding region 27. Of course, the assignment of guiding regions 21, 23, 25 and 27 to the individual irradiation units 7 - 10 and arranging the guiding regions 21, 23, 25 and 27 on the build plane 11 is chosen arbitrarily and can be changed.

Hence, different superordinate patterns 18 are formed in the overlap regions 29 - 33, wherein the shape of the superordinate pattern e.g. the target geometry, depends on the calibration patterns 14 - 17 of the different irradiation units 7 - 10 or in other words depends on which guiding regions 21, 23, 25 and 27 overlap. For example, the subordinate patterns 18 in the overlap region 29 is composed of the calibration pattern 14 and the calibration pattern 15, as the guiding regions 21 and 23 overlap. Analogously, the superordinate patterns 18 in the overlap regions 30, 31, 32 and 33 are formed by combining the calibration patterns that are generated in the respective guiding regions 21, 23, 25 and 27. For example, the superordinate patterns 18, as depicted in Fig. 2, that comprises all four calibration patterns 14 - 17 is formed in the overlap region 33 in which all four guiding regions 21, 23, 25 and 27 overlap.

Thus, it is possible to derive which irradiation unit 7 - 10 or which energy beam 2 - 5 is used to irradiate the calibration pattern 14 - 17 and whether the orientation and position of the calibration pattern 14 - 17 is met. For example, in each superordinate pattern 18 the size of the gap 20 or any other arbitrary reference marker 19, in particular the relative position of the reference marker 19 of a calibration pattern 14 - 17 and a reference marker 19 of another calibration pattern 14 - 17 can be determined, for example the relative position of abutting reference markers 19, for generating calibration information indicating whether the individual calibration patterns of 14 - 17 are generated in the right position with the right orientation and the like. Therefore, it is possible to generate calibration information indicating the calibration status of the irradiation device 6, in particular the irradiation units 7 - 10. Thus, it can be derived whether a calibration or an adjustment of one of the irradiation units 7 - 10 is necessary.

Advantageously it is possible to indicate which two or more calibration patterns 14 - 17 are generated in the individual overlap regions 29 - 33. In particular with respect to complex geometries or complex arrangements of guiding regions 21, 23, 25 and 27 it is beneficial to directly indicate which irradiation unit 7 - 10 was used to generate the calibration patterns 14 - 17.

As described before, the inventive method may be performed on the inventive apparatus 1, preferably using a control unit 34 which is adapted to control the irradiation device 6, in particular control the generation of the calibration patterns 14 - 17, as described before.

## Claims

1. Method for calibrating an apparatus (1) for additively manufacturing three-dimensional objects by means of successive layerwise selective irradiation and consolidation of layers of a build material which can be consolidated by means of an energy beam (2 - 5), which apparatus (1) comprises at least two irradiation units (7 - 10), each adapted to generate an energy beam (2 - 5), wherein each irradiation unit (7 - 10) is adapted to guide the corresponding energy beam (2 - 5) across an individual guiding region (21, 23, 25, 27) in a build plane (11), wherein at least two guiding regions (21, 23, 25, 27) overlap in at least one overlap region (29 - 33), **characterized by**
- generating at least one calibration pattern (14 - 17) in the at least one overlap region (29 - 33) via each of the at least two energy beams (2 - 5), wherein the at least two calibration patterns (14 - 17) are generated in defined relative positions and/or orientations forming a superordinate pattern (18) in the at least one overlap region (29 - 33)
- determining a calibration status of the at least two irradiation units (7 - 10) based on a calibration information relating to the spatial arrangement of the at least two calibration patterns (14 - 17) in the superordinate pattern (18), in particular the relative position
- adjusting the at least one irradiation unit (7 - 10) dependent on the calibration status.

2. Method according to claim 1, **characterized in that** each calibration pattern (14 - 17) comprises at least one defined reference marker (19), in particular a reference point and/or a reference line, wherein the calibration information is determined based on the relative position of at least two reference markers (19) of two different calibration patterns (14 - 17) in the same superordinate pattern (18).

3. Method according to claim 1 or 2, **characterized by** determining a defined gap (20) generated between each two corresponding reference markers (19) defining the relative position of two calibration patterns (14 - 17) in the superordinate pattern (18).

4. Method according to claim 3, **characterized in that** the reference marker (19) is a contour or an edge of the calibration pattern (14 - 17), wherein two adjacent calibration patterns (14 - 17) comprise two, in particular parallel, contours or edges enclosing the defined gap (20).

5. Method according to one of the preceding claims, **characterized in that** each irradiation unit (7 - 10) generates an individual calibration pattern (14 - 17) with the corresponding energy beam (2 - 5), in particular different in size and/or shape and/or orientation from at least one other calibration pattern (14 - 17) generated via another irradiation unit (7 - 10).

6. Method according to claim 4 or 5, **characterized in that** at least two irradiation units (7 - 10) generate calibration patterns (14 - 17) that are equal in shape and different in size and/or orientation.

7. Method according to one of the preceding claims, **characterized by** generating calibration patterns (14 - 17) in at least two defined positions, in particular equally distributed, across the guiding regions (21, 23, 25, 27) with each irradiation unit (7 - 10), wherein in each overlap region (29 - 33) in which at least two guiding regions (21, 23, 25, 27) overlap, the calibration patterns (14 - 17) generated via the at least two irradiation units (7 - 10) abut each other enclosing the defined gap (20).

8. Method according to one of the preceding claims, **characterized by** equally filling each guiding region (21, 23, 25, 27) with the corresponding calibration pattern (14 - 17) via the corresponding irradiation unit (7 - 10).

9. Method according to one of the preceding claims, **characterized in that** at least two overlap regions (29 - 33) comprise a different number of overlapping guiding regions (21, 23, 25, 27).

10. Method according to one of the preceding claims, **characterized in that** the guiding regions (21, 23, 25, 27) assigned to the individual irradiation units (7 - 10) are distributed over the build plane (11) according to a defined distribution, wherein the superordinate patterns (18) formed by the calibration patterns (14 - 17) differ in at least two overlap regions (29 - 33).

11. Method according to one of the preceding claims, **characterized in that** the calibration status is determined for at least two superordinate patterns (18) in two different positions, in particular for all superordinate patterns (18).

12. Method according to one of the preceding claims, **characterized in that** in at least one superordinate pattern (18) every calibration pattern (14 - 17) abuts every other calibration pattern (14 - 17) with at least one reference marker (19) or an indirect relation is established between at least two calibration patterns (14 - 17) abutting an intermediate calibration pattern (14 - 17).

13. Method according to one of the preceding claims, **characterized in that** four irradiation units (7 - 10) are used to generate four calibration patterns (14 - 17), wherein three calibration patterns (14 - 16) are generated as rhombi with different orientations, in particular differing by 120°, and one calibration pattern (17) is generated as a hexagon, wherein in an overlap region (29 - 33) in which all four guiding regions (21, 23, 25, 27) overlap, each calibration pattern (14 - 17) abuts the three other calibration patterns (14 - 17) with a corresponding reference marker (19), in particular with a parallel edge.

14. Control unit (34) for calibrating an apparatus (1) for additively manufacturing three-dimensional objects by means of successive layerwise selective irradiation and consolidation of layers of a build material which can be consolidated by means of an energy beam (2 - 5), which apparatus (1) comprises at least two irradiation units (7 - 10), each adapted to generate an energy beam (2 - 5), wherein each irradiation unit (7 - 10) is adapted to guide the corresponding energy beam (2 - 5) in an individual guiding region (21, 23, 25, 27) across the build plane (11), wherein at least two guiding regions (21, 23, 25, 27) overlap in at least one overlap region (29 - 33), **characterized in that** the control unit (34) is adapted to generate at least one calibration pattern (14 - 17) in the at least one overlap region (29 - 33) via each of the irradiation units (7 - 10) being adapted to generate the at least two energy beams (2 - 5), wherein the control unit (34) is adapted to generate the at least two calibration patterns (14 - 17) in defined relative positions forming a superordinate pattern (18) in the at least one overlap region (29 - 33), wherein the control unit (34) is adapted to determine a calibration status of the at least two irradiation units (7 - 10) based on a calibration information relating to the spatial arrangement of the at least two calibration patterns (14 - 17) in the superordinate pattern (18), in particular the relative position, wherein the control unit (34) is adapted to adjust the at least one irradiation unit (7 - 10) dependent on the calibration status.

15. Apparatus (1) for additively manufacturing three-dimensional objects by means of successive layerwise selective irradiation and consolidation of layers of a build material which can be consolidated by means of an energy beam (2 - 5), comprising at least two irradiation units (7 - 10), each adapted to generate an energy beam (2 - 5), wherein each irradiation unit (7 - 10) is adapted to guide the corresponding energy beam (2 - 5) in an individual guiding region (21, 23, 25, 27) across the build plane (11), wherein at least two guiding regions (21, 23, 25, 27) overlap in at least one overlap region (29 - 33), **characterized by** a control unit (34), in particular a control unit (34) according to claim 14, that is adapted to generate at least one calibration pattern (14 - 17) in the at least one overlap region (29 - 33) via each of the irradiation units (7 - 10) being adapted to generate the at least two energy beams (2 - 5), wherein the control unit (34) is adapted to generate the at least two calibration patterns (14 - 17) in defined relative positions forming a superordinate pattern (18) in the at least one overlap region (29 - 33), wherein the control unit (34) is adapted to determine a calibration status of the at least two irradiation units (7 - 10) based on a calibration information relating to the spatial arrangement of the at least two calibration patterns (14 - 17) in the superordinate pattern (18), in particular the relative position, wherein the control unit (34) is adapted to adjust the at least one irradiation unit (7 - 10) dependent on the calibration status.
